(19) Europäisches Patentamt
European Patent Office
Office européen des brevets

(11) **EP 3 577 672 B1**

(12) **FASCICULE DE BREVET EUROPEEN**

(45) Date de publication et mention
de la délivrance du brevet:
**02.06.2021 Bulletin 2021/22**

(21) Numéro de dépôt: **18704269.2**

(22) Date de dépôt: **15.01.2018**

(51) Int Cl.:
*H01H 33/59* *(2006.01)*      *H02H 9/02* *(2006.01)*

(86) Numéro de dépôt international:
**PCT/FR2018/050090**

(87) Numéro de publication internationale:
**WO 2018/142038 (09.08.2018 Gazette 2018/32)**

(54) **DISPOSITIF DE COUPURE DE COURANT CONTINU HAUTE TENSION**

HOCHSPANNUNGSGLEICHSTROMUNTERBRECHUNGSVORRICHTUNG

HIGH-VOLTAGE DIRECT-CURRENT CUTOFF SWITCH DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR MA TN**

(30) Priorité: **31.01.2017 FR 1750792**

(43) Date de publication de la demande:
**11.12.2019 Bulletin 2019/50**

(73) Titulaire: **Supergrid Institute**
**69100 Villeurbanne (FR)**

(72) Inventeurs:
• **LEGENDRE, Pierre**
**69100 Villeurbanne (FR)**
• **CHASSAGNOUX, Raphaël**
**44 000 Nantes (FR)**
• **CREUSOT, Christophe**
**01120 Pizay (FR)**
• **GUUINIC, Philippe**
**75014 Paris (FR)**

(74) Mandataire: **Cabinet Beau de Loménie**
**51 avenue Jean Jaurès**
**BP 7073**
**69301 Lyon Cedex 07 (FR)**

(56) Documents cités:
**WO-A1-2016/092182     FR-A5- 2 154 929**

**Description**

L'invention concerne le domaine des réseaux de transmission et/ou de distribution de courant continu sous haute tension, généralement désignés sous l'acronyme HVDC. L'invention porte en particulier sur les dispositifs de coupure de courant de défaut destinés à de tels réseaux.

Les réseaux HVDC sont notamment envisagés comme une solution à l'interconnexion de sites de production d'électricité disparates ou non synchrones. Les réseaux HVDC sont notamment envisagés pour la transmission et la distribution d'énergie produite par des fermes éoliennes offshore plutôt que des technologies de courant alternatif, du fait de pertes en ligne inférieures et d'absence d'incidence des capacités parasites du réseau sur de longues distances. De tels réseaux ont typiquement des niveaux de tension de l'ordre de 50 kV et plus.

Dans le présent texte, on considère comme haute tension, pour un courant continu, un dispositif dans lequel la tension de service nominale est supérieure à 1500 V en courant continu. Une telle haute tension est, de manière complémentaire, qualifiée également de très haute tension lorsqu'elle est supérieure à 75 000 V en courant continu.

Pour de la transmission d'électricité point à point, un sectionnement peut être réalisé par l'intermédiaire d'un convertisseur en bout de ligne. Par contre, le sectionnement ne peut plus être réalisé par un tel convertisseur dans de la transmission multipoints. La coupure du courant continu dans de tels réseaux est un enjeu crucial conditionnant directement la faisabilité et le développement de tels réseaux.

Le document EP-0.431.510 décrit notamment un dispositif de coupure pour courant continu sous haute tension.

On connait par ailleurs des appareils de coupure de type disjoncteur mécanique pour réaliser la coupure de courant, c'est à dire que la coupure du courant est obtenue uniquement par l'ouverture d'un élément interrupteur mécanique. Un tel élément interrupteur mécanique comporte deux pièces conductrices faisant contact qui sont en contact mécanique et électrique lorsque l'élément interrupteur est fermé et qui se séparent mécaniquement lorsque l'élément interrupteur est ouvert. Ces disjoncteurs mécaniques présentent plusieurs Inconvénients notamment lorsqu'ils sont traversés par des courants importants.

En présence d'un courant et/ou d'une tension importante, la coupure mécanique peut se traduire par l'établissement d'un arc électrique entre les deux pièces conductrices, du fait des énergies importantes accumulées dans le réseau que l'appareil protège. Tant que l'arc électrique reste établi au travers de la coupure mécanique, l'appareil de coupure ne réalise pas la coupure électrique puisqu'un courant continue de circuler au travers de l'appareil par la présence de l'arc. La coupure électrique, au sens de l'interruption effective de la circulation du courant électrique, est parfois particulièrement difficile à réaliser dans un contexte de courant continu et de tension élevée, ces conditions tendant à entretenir l'arc électrique. Par ailleurs, cet arc électrique dégrade, d'une part par érosion les deux pièces conductrices faisant contact, et d'autre part le milieu environnant par ionisation. De plus, le courant met un certain temps à s'interrompre du fait de cette ionisation. Cela nécessite des opérations de maintenance de l'appareil de coupure qui sont contraignantes et coûteuses.

Les courants de défauts en réseau HVDC sont particulièrement violents et destructeurs. Lorsqu'un défaut générant un fort courant apparait, il est nécessaire de le couper rapidement ou éventuellement de le limiter en attendant que la coupure soit possible. De plus, la coupure des courants HVDC est plus complexe à réaliser que celle des courants alternatifs (AC). En effet, lors de la coupure d'un courant alternatif, on profite d'un passage par zéro du courant pour réaliser la coupure. Les disjoncteurs pour courant alternatif « classiques » sont donc inadaptés à la coupure des courants continus sous haute tension, à moins de générer un passage par zéro via un circuit adéquat autour du disjoncteur. Des systèmes remplissant ce rôle de limitation et de coupure existent. Plusieurs solutions ont été proposées pour la coupure de courant HVDC : appareils de coupure de courant entièrement électroniques, hybrides électronique/mécanique, ou mécaniques, éventuellement aidés par des composants passifs.

Comme on le verra, l'invention propose une solution de ce dernier type. Il s'agit en effet d'associer un limiteur de courant, qui dans l'exemple illustré est un composant passif, à un appareil de coupure, qui est par exemple un disjoncteur mécanique, et à un circuit oscillant générant le passage du courant par zéro dans ce disjoncteur. Le document WO-2016/092182, du demandeur, décrit un tel dispositif de coupure HVDC permettant d'assurer une protection du réseau en un temps réduit, et limitant fortement les pertes de conduction sur la ligne de transmission. Ce dispositif de coupure de courant pour courant continu haute tension comprend :

- une première borne 101 et une deuxième borne 102 ;
- une ligne de conduction principale 141 qui s'étend entre les première et deuxième bornes et qui comprend, en série, un appareil de coupure de courant principal 121, ayant une première borne et une deuxième borne, et un limiteur de courant 111,
- une ligne d'accumulation, connectée à ses deux extrémités à la ligne de conduction principale, électriquement en parallèle du limiteur de courant, et comprenant au moins un condensateur d'accumulation 131 ;
- une ligne d'oscillation, en parallèle de l'appareil de coupure principal par rapport à la ligne de conduction principale et comprenant un interrupteur de commande d'oscillation 123 ;

- dans lequel tout ou partie de la ligne de conduction principale, de la ligne d'accumulation et de la ligne d'oscillation forment, aux bornes de l'appareil de coupure principal, un circuit oscillant lorsque l'interrupteur de commande d'oscillation est amené dans un état fermé ;
- et dans lequel le dispositif présente un premier mode de fonctionnement dans lequel l'appareil de coupure principal 121 est dans un état fermé et l'interrupteur de commande d'oscillation 123 est dans un état ouvert, et au moins un deuxième mode de fonctionnement dans lequel l'appareil de coupure principal 121 est commandé vers un état ouvert et l'interrupteur de commande d'oscillation 123 est commandé vers un état fermé.

Le dispositif du document WO-2016/092182 fonctionne de manière satisfaisante. Cependant, ce dispositif impose de fortes contraintes sur le disjoncteur principal après la coupure (en particulier la tension transitoire de rétablissement : TTR), avec un risque de réamorçage et donc d'échec de la coupure. Les autres composants voient aussi de forts dépassements de courant/tension.

Un problème subsistant dans le montage du document WO-2016/092182 est qu'il nécessite, dans la ligne d'accumulation et dans la ligne d'oscillation, des composants prévus pour supporter des tensions très élevées. De tels composants sont onéreux.

Dans le but de répondre au moins en partie à ce problème, l'invention propose donc un dispositif de coupure de courant pour courant continu haute tension, comprenant :

- en série, un appareil de coupure et un limiteur de courant dans une ligne de conduction principale ;
- une ligne d'accumulation en parallèle du limiteur de courant,
- un circuit oscillant, en parallèle de l'appareil de coupure, comprenant, dans une ligne d'oscillation, un Interrupteur de commande d'oscillation et ayant une inductance, caractérisé en ce que la ligne d'accumulation comporte au moins deux condensateurs d'accumulation, et en ce que la ligne d'oscillation s'étend depuis un point de piquage de la ligne d'accumulation situé entre les deux condensateurs d'accumulation, déterminant un tronçon secondaire de la ligne d'accumulation relié à la ligne de conduction principale entre le limiteur de courant et l'appareil de coupure principal de manière à faire partie du circuit oscillant.

Selon l'invention, le dispositif de coupure de courant pour courant continu haute tension,

- comprend :

- une première borne et une deuxième borne ;
- une ligne de conduction principale qui s'étend entre les première et deuxième bornes et qui comprend, en série, un appareil de coupure de courant principal, ayant une première borne et une deuxième borne, et un limiteur de courant configuré pour limiter tout courant le traversant dont l'intensité dépasse une valeur dite intensité de seuil à une valeur dite intensité limitée;
- une ligne d'accumulation connectée à ses deux extrémités à la ligne de conduction principale, électriquement en parallèle du limiteur de courant, et comprenant au moins un condensateur d'accumulation ;
- une ligne d'oscillation, électriquement en parallèle de l'appareil de coupure principal par rapport à la ligne de conduction principale, comprenant un interrupteur de commande d'oscillation et ayant une inductance ;

- dans lequel tout ou partie de ta ligne de conduction principale, de la ligne d'accumulation et de la ligne d'oscillation forment, aux bornes de l'appareil de coupure principal, un circuit oscillant lorsque l'interrupteur de commande d'oscillation est amené dans un état fermé ;
- et dans lequel le dispositif présente un premier mode de fonctionnement dans lequel l'appareil de coupure principal est dans un état fermé et l'interrupteur de commande d'oscillation est dans un état ouvert, et au moins un deuxième mode de fonctionnement dans lequel l'appareil de coupure principal est commandé vers un état ouvert et l'interrupteur de commande d'oscillation est commandé vers un état fermé,

caractérisé en ce que
la ligne d'accumulation comporte au moins un premier condensateur d'accumulation et un deuxième condensateur d'accumulation, et en ce que la ligne d'oscillation s'étend depuis un point de piquage de la ligne d'accumulation situé entre les deux condensateurs d'accumulation, déterminant un tronçon primaire et un tronçon secondaire de la ligne d'accumulation, le tronçon secondaire étant relié à la ligne de conduction principale entre le limiteur de courant et l'appareil de coupure principal de manière à faire partie du circuit oscillant.

Selon d'autres caractéristiques optionnelles d'un dispositif selon l'invention prises seules ou en combinaison,

- Le dispositif peut comporter au moins un parasurtenseur connecté à l'une au moins de la première borne et de la deuxième borne du dispositif, de préférence un premier parasurtenseur connecté à la première borne et un deuxième parasurtenseur connecté à la deuxième borne du dispositif.
- Au moins un des condensateurs d'accumulation dans la ligne d'accumulation peut être associé avec un dispositif de décharge du condensateur ; de préférence tous les condensateurs d'accumulation dans la ligne d'accumulation sont associés avec un dispositif de décharge.

- Le dispositif peut comporter, ou être associé à, un organe d'isolement du courant dans la ligne de conduction principale.
- Ladite ligne de d'oscillation peut comprendre un condensateur d'oscillation supplémentaire connecté en série avec ledit interrupteur de commande d'oscillation.
- Le condensateur d'oscillation dans la ligne d'oscillation peut être associé avec un dispositif de décharge du condensateur.
- Le dispositif peut comporter, en série dans le tronçon primaire de la ligne d'accumulation, une résistance additionnelle agencée entre le premier condensateur d'accumulation et le point de piquage où la ligne d'oscillation est raccordée électriquement à la ligne d'accumulation.
- Le dispositif peut comporter un circuit de charge reliant, de manière commandée, le circuit d'oscillation à la terre pour provoquer le chargement rapide d'un ou plusieurs condensateur(s) du circuit oscillant.
- Le circuit de charge peut comporter un interrupteur de commande de charge.
- Le circuit de charge peut comporter un condensateur de charge dont une armature est reliée électriquement au circuit oscillant et dont l'autre armature est reliée sélectivement, par l'intermédiaire de l'interrupteur de commande de charge, à la terre.
- Le circuit de charge peut comporter une résistance électrique de charge.
- Une résistance peut être disposée en parallèle du limiteur de courant, et être associée à un ou plusieurs organes de coupure ou de commutation permettant la circulation du courant du circuit de conduction principal soit par le limiteur de courant soit par la résistance parallèle.
- Ledit limiteur de courant peut être du type résistance supraconductrice.
- La ligne d'oscillation peut comprendre une bobine connectée en série avec ledit Interrupteur de commande d'oscillation.
- Le dispositif peut comporter un circuit électronique de commande apte à commander l'appareil de coupure principal et l'interrupteur de commande d'oscillation vers leur état ouvert ou vers leur état fermé.
- Ledit circuit de commande peut être configuré pour détecter une surintensité dans le premier mode de fonctionnement et configuré pour générer un signal d'ouverture de l'appareil de coupure principal au plus tard 100 millisecondes après ladite détection de la surintensité.
- Ledit circuit de commande dans le deuxième mode de fonctionnement peut être configuré pour générer un signai d'ouverture de l'appareil de coupure principal et configuré pour générer un signal de fermeture de l'interrupteur de commande d'oscillation après la génération du signal d'ouverture de l'appareil de coupure principal.

- Un parasurtenseur peut être connecté électriquement en parallèle d'au moins un condensateur d'accumulation.
- Le dispositif peut être dimensionné pour l'application d'une différence de potentiel au moins égale à 10 kV et d'un courant nominal au moins égal à 500 A entre les première et deuxième bornes du dispositif.
- Le circuit d'oscillation peut être dimensionné pour créer, dans le circuit d'oscillation, une amplitude d'oscillation dintensité au moins égale à l'intensité de seuil et au moins égale à l'intensité limitée par le limiteur de courant.
- La fréquence de résonance dudit circuit oscillant formé peut être inférieure ou égale à 10 kHz et/ou la dérivée du courant dans le circuit oscillant par rapport au temps peut être au plus égale à 500 A/microseconde.
- La fréquence de résonance dudit circuit oscillant formé peut être supérieure ou égale à 500 Hz.
- C131 représentant la capacité électrique équivalente du tronçon primaire de la ligne d'accumulation, et C132 représentant la capacité électrique équivalente du tronçon secondaire de la ligne d'accumulation, le paramètre Alpha==C132/(C131+C132) peut être supérieur ou égal à 0,2, de préférence supérieur ou égal à 0,4, plus préférentiellement supérieur ou égal à 0,5.
- C131 représentant la capacité électrique équivalente du tronçon primaire de la ligne d'accumulation, et G1 32 représentant la capacité électrique équivalente du tronçon secondaire de la ligne d'accumulation, le paramètre Alpha=-C132/(C131+C132) peut être inférieur ou égal à 0,9, de préférence inférieur ou égal à 0,8.
- C131 représentant la capacité électrique équivalente du tronçon primaire de la ligne d'accumulation, et C132 représentant la capadté électrique équivalente du tronçon secondaire de la ligne d'accumulation, le paramètre Alpha=C132/(C131+C132) peut être compris dans la gamme allant de 0,4 à 0,9, de préférence dans la gamme allant de 0,4 à 0,8, plus préférentiellement dans la gamme allant de 0,5 à 0,8.
- Le dispositif peut comporter un circuit « snubber » raccordé électriquement en parallèle aux bornes de l'appareil de coupure principal

Diverses autres caractéristiques ressortent de la description faite ci-dessous en référence aux dessins annexés qui montrent, à titre d'exemples non limitatifs, des formes de réalisation de l'objet de l'invention.

Les **Figures 1** à **7** illustrent de manière schématique différents exemples de réalisation d'un dispositif de coupure conforme aux enseignements de l'invention.

La **Figure 8** Illustre différentes courbes de variation de tension aux bornes l'appareil de coupure principal, pour des valeurs différentes du paramètre Alpha reflétant la proportion de chaque capacité électrique dans le pont de condensateurs.

La **Figure 9** Illustre le déroulement d'une séquence d'ouverture d'un dispositif de coupure selon l'invention.

L'invention propose un dispositif de coupure de courant pour courant continu haute tension.

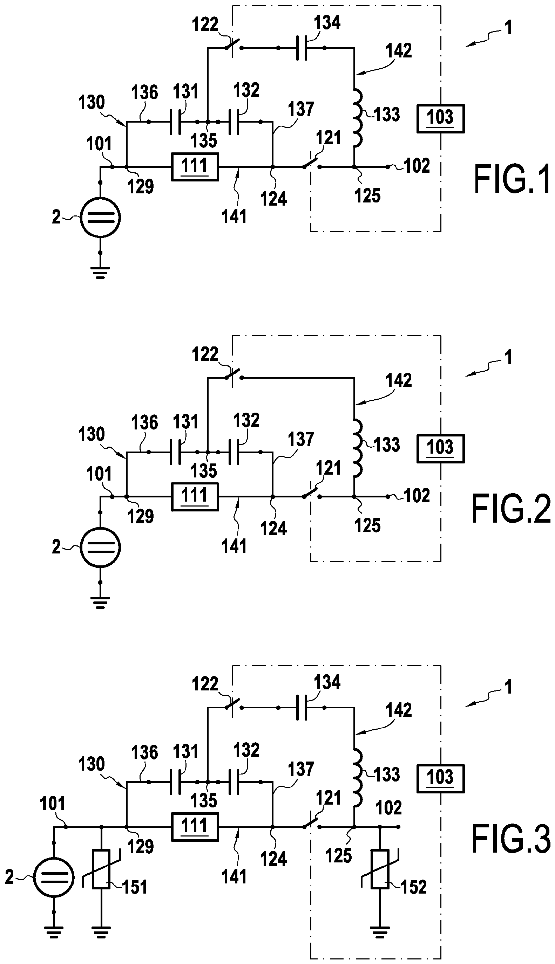

La **Fig. 1** est une représentation schématique d'un premier mode de réalisation d'un dispositif de coupure **1** selon l'invention. Comme on peut le voir sur la **Fig. 1,** le dispositif de coupure de courant **1** comporte une première borne **101** et une deuxième borne **102**. Ces bornes forment des entrées/sorties pour le courant dans le dispositif **1.** Chacune de ces bornes peut correspondre à une borne physique, par exemple une borne de raccordement physique, ou une borne virtuelle comme étant un point le long d'un conducteur.

Le dispositif **1** comporte une ligne de conduction principale **141** qui s'étend entre la première borne **101** et la deuxième borne **102** et qui comprend, en série, un appareil de coupure de courant principal **121,** ayant une première borne **124** et une deuxième borne **125,** et un limiteur de courant **111** configuré pour maintenir l'intensité de courant le traversant à un niveau inférieur ou égal à une intensité limitée.

L'appareil de coupure de courant principal **121** est avantageusement un appareil électromécanique, notamment du fait des faibles pertes en ligne qu'il est capable de générer. Il s'agit par exemple d'un disjoncteur. Les bornes **124, 125** de l'appareil de coupure principal **121** forment des entrées/sorties pour le courant dans l'appareil de coupure principal **121**. Chacune de ces bornes **124, 125** de l'appareil de coupure peut correspondre à une borne physique, par exemple une borne de raccordement physique, ou une borne virtuelle comme étant un point le long d'un conducteur. Dans l'exemple illustré, la ligne de conduction principale **141** comporte au moins un conducteur électrique, tel qu'un câble et/ou un barreau métallique, qui s'étend entre les deux bornes **101, 102** du dispositif **1** et dans lequel sont insérés l'appareil de coupure de courant principal **121** et le limiteur de courant **111**.

Le dispositif **1** est destiné à être intégré dans une installation électrique. Dans l'exemple illustré, la première borne **101** du dispositif **1** est reliée à une source de courant à haute tension **2**. La deuxième borne **102** est par exemple reliée à un circuit consommateur de courant, par exemple une charge électrique ou un réseau électrique. De la sorte, on peut considérer que, dans l'exemple illustré, la borne **101** est une borne amont, ou d'entrée du courant, tandis que la deuxième borne **102** est une borne aval, ou de sortie du courant, dans le sens de circulation du courant. Cependant, le dispositif **1** selon l'invention est réversible, de sorte que l'on pourrait prévoir une circulation du courant au travers du dispositif selon le sens inverse.

La ligne de conduction principale **141** est destinée à être traversée par le courant nominal fourni par la source de tension continue **2**.

Le limiteur de courant **111** et l'appareil de coupure principal **121** sont connectés électriquement en série dans la ligne de conduction principale **141** entre les bornes **101** et **102** du dispositif **1.**

Le limiteur de courant **111** est configuré pour que, pour tout courant le traversant dépassant une intensité de seuil, le limiteur limite le courant à une valeur appelée intensité limitée. Les valeurs d'intensité de seuil et d'intensité limitée peuvent être égales. La valeur d'intensité limitée peut être supérieure à l'intensité de seuil qui déclenche l'entrée en action du limiteur. La valeur d'intensité limitée peut être inférieure à l'intensité de seuil qui déclenche l'entrée en action du limiteur Les valeurs d'intensité de seuil et d'intensité limitée sont du même ordre de grandeur, de préférence au maximum dans un rapport de 1 à 3. Lors d'une surintensité, par exemple due à un court-circuit entre la borne **102** et la terre, la valeur d'Intensité du courant traversant le limiteur de courant **111** suit typiquement et transitoirement une rampe croissante, jusqu'à un pic, et franchit notamment l'intensité de seuil qui est une valeur d'activation du limiteur **111**. Le courant redescend ensuite très rapidement jusqu'à la valeur d'intensité limitée définie par le dimensionnement du limiteur **111**. Afin d'éviter un échauffement excessif du limiteur **111**, le dispositif **1** est configuré pour couper le courant traversant ce limiteur **111** en un temps réduit.

Le limiteur de courant **111** comprend avantageusement un limiteur de courant, de préférence du type supraconducteur SCFCL (Superconducting Fault Current Limiter). Dans ce cas, il peut comprendre une résistance supraconductrice traversée par le courant circulant dans la ligne de conduction principale **141.** De manière connue, un tel limiteur de courant présente une résistance électrique nulle, ou pouvant être considérée comme nulle, tant que l'intensité du courant le traversant est inférieure à la valeur d'activation que constitue l'intensité de seuil. Typiquement, cette résistance électrique est rigoureusement nulle en courant continu stable, à l'exception de la résistance, pouvant être considérée comme nulle, des parties non supraconductrices comme les imperfections, les joints et les soudures. Dans ces conditions, la différence de potentiel aux bornes du limiteur de courant **111** est nulle ou peut être considérée comme nulle. Lorsque la valeur d'intensité du courant dépasse la valeur d'activation du limiteur, ici appelée intensité de seuil, la résistance électrique du limiteur de courant augmente brutalement, ce qui tend à limiter l'intensité du courant pouvant traverser le limiteur de courant et à générer une tension aux bornes du limiteur de courant **111**.

Un limiteur de courant **111** du type supraconducteur SCFCL comprend par exemple un câble ou enroulement ou autre élément en matériau supraconducteur traversé par le courant nominal entre les bornes **101** et **102**. L'élément en matériau supraconducteur est par exemple baigné dans un bain d'azote liquide afin de le maintenir en dessous de sa température critique tant que l'intensité du courant le traversant est inférieure à la valeur d'activation. Le limiteur de courant **111** peut comporter une composante inductive.

Un autre type de limiteur de courant **111** peut bien entendu être envisagé, en particulier un limiteur de courant incluant des IGBT et dont la structure est connue en sol, ou encore un limiteur de courant résistif.

Le dispositif **1** comprend par ailleurs une ligne d'accumulation **130**, connectée à ses deux extrémités à la ligne de conduction principale **141**, électriquement en parallèle du limiteur de courant **111**. La ligne d'accumulation **130** comprend au moins un conducteur, tel qu'un câble et/ou un barreau métallique, et au moins deux condensateurs d'accumulation **131**, **132**, par exemple un premier condensateur d'accumulation **131** et un deuxième condensateur d'accumulation **132**, qui sont agencés en série dans la ligne d'accumulation **130**. Dans l'exemple illustré, la ligne d'accumulation **130** comporte une première extrémité **129** qui est reliée électriquement à la ligne de conduction principale **141** entre la première borne **101** et le limiteur de courant **111**. La deuxième extrémité de la ligne d'accumulation **130** est reliée électriquement à la ligne de conduction principale **141** entre le limiteur de courant **111** et l'appareil de coupure principal **121**. De manière particulière, comme dans l'exemple illustré, la deuxième extrémité de la ligne d'accumulation **130** peut correspondre à la première borne **124** de l'appareil de coupure principal **121**.

Le dispositif **1** comporte par ailleurs une ligne d'oscillation **142**, électriquement en parallèle de l'appareil de coupure principal **121** par rapport à la ligne de conduction principale **141**, ayant une inductance et comprenant un interrupteur de commande d'oscillation **122**.

La ligne d'oscillation **142** s'étend depuis une première extrémité qui est liée électriquement à un point de piquage **135** de la ligne d'accumulation situé entre les deux condensateurs d'accumulation **131**, **132**. Le point de piquage **135** détermine un tronçon primaire **136** et un tronçon secondaire **137** de la ligne d'accumulation **130**. Le tronçon secondaire **137** est, comme on l'a vu plus haut, relié à la ligne de conduction principale **141** entre le limiteur de courant **111** et l'appareil de coupure principal **121** de manière à faire partie du circuit oscillant. Le tronçon secondaire **137** comporte au moins un condensateur d'accumulation, en l'occurrence le second condensateur d'accumulation **132**. L'un et/ou l'autre des deux tronçons **136**, **137** peut comporter plusieurs condensateurs. On considère alors la capacité électrique équivalente du tronçon considéré, et le tronçon considéré peut être vu comme ayant un seul condensateur équivalent ayant la capacité électrique équivalente du tronçon considéré.

La ligne d'oscillation **142** est reliée électriquement, par une deuxième extrémité, à la ligne de conduction principale **141** de l'autre côté de l'appareil de coupure principal **121** par rapport à la liaison du tronçon secondaire **137** avec la ligne de conduction principale **141** de telle sorte que la ligne d'oscillation **142**, prolongée par le tronçon secondaire **137** de la ligne d'accumulation **130**, forme une ligne électriquement parallèle à l'appareil de coupure principal **121** par rapport à la ligne de conduction principale **141**. De manière particulière à l'exemple illustré, la deuxième extrémité de la ligne d'oscillation **142** correspond à la deuxième borne **125** de l'appareil de coupure principal **121**.

L'inductance de la ligne d'oscillation **142** est formée soit par un composant inductif spécifique, par exemple une bobine **133**, soit par l'inductance propre du conducteur électrique de la ligne d'oscillation **142**, lequel peut comprendre un câble et/ou barreau métallique, voire plusieurs.

Ainsi, lorsque l'interrupteur de commande d'oscillation **122** est amené dans un état fermé, on forme, aux bornes **124**, **125** de l'appareil de coupure principal **121**, un circuit oscillant comprenant au moins un condensateur d'accumulation **132** et l'inductance de la ligne d'oscillation **142**. Dans le cas illustré, le circuit oscillant comporte la ligne d'oscillation **142** et le tronçon secondaire **137** de la ligne d'accumulation **130**. Cependant, suivant la disposition précise des points de raccordement, le circuit oscillant peut aussi comprendre un ou plusieurs tronçons de la ligne de conduction principale **141**. En d'autres termes, le circuit oscillant est formé par tout ou partie de la ligne de conduction principale **141**, de la ligne d'accumulation **130** et de la ligne d'oscillation **140**, et il est refermé par l'appareil de coupure principal **121**.

Un courant électrique est susceptible de circuler en boucle dans le circuit oscillant lorsque l'interrupteur de commande d'oscillation **122** est fermé et que l'appareil de coupure principal **121** est dans un état de fermeture électrique dans lequel il conduit le courant entre ses bornes. Le courant électrique est un courant oscillant, c'est-à-dire alternatif, résultant de la décharge du condensateur d'accumulation **132** au travers de l'inductance **133** de la ligne d'oscillation **142**. Comme on le verra plus loin, le circuit oscillant peut comporter plusieurs condensateurs. La présence d'une inductance **133** sous la forme d'un composant inductif spécifique, notamment une bobine, permet de définir avec précision la fréquence de résonance du circuit oscillant formé lors de la fermeture de l'interrupteur de commande d'oscillation **122**. En effet, la valeur d'inductance de cette inductance **133** sera alors prépondérante par rapport aux inductances parasites dans le circuit oscillant pour la détermination de la fréquence de résonance du circuit oscillant.

Dans l'invention, la ligne d'accumulation **130** comporte un premier condensateur d'accumulation **131**, situé dans le tronçon primaire **136** et un second condensateur d'accumulation **132** situé dans le tronçon secondaire **137**. Les deux condensateurs d'accumulation **131**,

**132,** de capacité électrique non nulle, par exemple comprise dans la gamme allant de 0.1 à 10 microfarad pour des tensions de l'ordre de 50 à 500 kV, se chargent par l'apparition d'une différence de potentiel aux bornes du limiteur de tension **111** lorsque celui-ci limite le courant au travers du dispositif. Le second condensateur d'accumulation **132,** dans le tronçon secondaire **137,** génère et participe aux oscillations de courant dans le circuit oscillant lorsque l'interrupteur de commande d'oscillation **122** est fermé. Le premier condensateur d'accumulation **131** ne génère ni ne participe aux oscillations de courant, tout au moins pas de manière significative, mais supporte une partie de la tension lors de la tentative de coupure. Ainsi, la présence des deux condensateurs d'accumulation, dont un seul est intégré en série dans le circuit oscillant lorsque l'interrupteur de commande d'oscillation **122** est fermé, permet de réduire le dimensionnement des condensateurs d'accumulation.

Le circuit oscillant, et notamment ses condensateurs et son inductance, sont dimensionnés électriquement de manière à pouvoir générer un courant oscillant ayant une amplitude d'oscillation de l'intensité de courant, c'est-à-dire la valeur absolue maximale de l'intensité de courant au moins égale à l'intensité limitée maintenue par le limiteur de courant **111.** De préférence, cette condition est respectée sur plusieurs périodes d'oscillation successives.

Ainsi, le dispositif **1** présente un premier mode de fonctionnement, ou mode nominal, dans lequel l'appareil de coupure principal **121** est dans un état fermé et l'interrupteur de commande d'oscillation **122** est dans un état ouvert. Dans ce mode de fonctionnement nominal, un courant nominal peut circuler au travers du dispositif de coupure **1** dans la ligne de conduction principale **141.**

Le dispositif **1** présente par ailleurs au moins un deuxième mode de fonctionnement, dit mode de protection, dans lequel l'appareil de coupure principal **121** est commandé vers un état ouvert et l'interrupteur de commande d'oscillation **122** est commandé vers un état fermé.

Pour cela, l'interrupteur de commande d'oscillation **122** du dispositif de coupure est de préférence un interrupteur commandé, par exemple électriquement, et le dispositif **1** comporte ou est associé à un circuit de commande électronique **103** de l'interrupteur de commande d'oscillation **122** pour commander ce dernier entre ses états électriquement ouvert et fermé.

Dans ce cas, l'appareil de coupure principal **121** est de préférence lui aussi commandé, par exemple électriquement, par le circuit de commande électronique **103.**

Le circuit de commande électronique **103** peut comporter notamment un microprocesseur, de la mémoire vive, de la mémoire morte, un bus de communication et des entrées/sorties de communication. Le circuit électronique de commande **103** peut comporter ou être relié à des capteurs, notamment des capteurs de courant ou de tension mesurant la tension en divers points du dispositif **1** ou de l'installation électrique dans laquelle le dispositif est intégré. Dans une version simple, un tel circuit de commande électronique **103** peut comporter par exemple un réducteur de mesure destiné à mesurer la tension aux bornes du limiteur de courant **111,** un comparateur doté d'une horloge interne et un bus de communication. Le circuit de commande **103** peut être dédié au dispositif, ou peut faire partie d'un circuit de commande contrôlant d'autres éléments de l'installation.

Le circuit de commande **103** est configuré pour appliquer des signaux de commande à l'interrupteur de commande d'oscillation **122** et, le cas échéant, à l'appareil de coupure principal **121,** en vue d'obtenir sélectivement leur ouverture/fermeture respective. Le circuit de commande **103** est en outre de préférence configuré pour détecter une surintensité dans la ligne de conduction principale **141.** Le circuit **103** peut à cet effet recevoir une mesure du courant traversant le limiteur de courant **111** (par exemple envoyée par une sonde de courant) ou recevoir une mesure de la différence de potentiel aux bornes du limiteur de courant **111** ou d'un des condensateurs d'accumulation **131, 132** (par exemple envoyée par un voltmètre). La détection de la surintensité peut être réalisée par le limiteur de courant **111** lui-même. Ainsi, si le franchissement d'un seuil de courant ou de différence de potentiel est détecté par le circuit **103,** celui-ci peut basculer d'un premier mode de fonctionnement dans lequel le dispositif **1** doit conduire un courant nominal entre les bornes **101** et **102,** vers un deuxième mode de fonctionnement dans lequel le dispositif 1 doit couper le courant entre les bornes **101** et **102.** Par exemple, le basculement peut survenir lorsque la mesure de tension aux bornes du limiteur de courant **111** dépasse un certain seuil durant une certaine durée (par ex. plus de 10 000 Volts durant plus de 1 milliseconde).

Dans le premier mode de fonctionnement, le circuit **103** maintient l'interrupteur de commande d'oscillation **122** ouvert pour éviter la conduction dans la ligne d'oscillation **142,** et maintient l'appareil de coupure principal **121** fermé pour garantir la conduction dans la ligne de conduction principale **141** à travers le limiteur de courant **111.**

Dans le deuxième mode de fonctionnement, le circuit **103** génère une commande d'ouverture de l'appareil de coupure principal **121** et une commande de fermeture de l'interrupteur de commande d'oscillation **122.** De préférence, le circuit de commande **103** détecte au préalable l'apparition d'une surintensité lors du franchissement de la valeur d'activation de l'intensité du courant, à savoir l'intensité de seuil, et génère la commande d'ouverture de l'appareil de coupure principal **121** seulement après un délai d'attente. L'intensité de seuil qui correspond à l'activation du limiteur d'intensité **111** pourra par exemple être au moins égale à 2 fois, de préférence au moins égale à 4 fois l'intensité nominale du courant nominal, afin de limiter les risques d'ouverture intempestive de l'appareil de coupure principal **121.**

Ainsi, lors de l'apparition d'une surintensité, le limiteur de courant **111** maintient l'intensité du courant le traversant à une intensité limitée et la différence de potentiel aux bornes du limiteur de courant augmente en proportion. Les condensateurs d'accumulations **131**, **132,** qui sont connectés électriquement en parallèle du limiteur de courant **111**, se chargent alors électriquement À la fermeture de l'interrupteur de commande d'oscillation de la ligne d'oscillation, le circuit oscillant formé force le courant traversant l'appareil de coupure principal à passer par une valeur nulle lors de la décharge du condensateur d'accumulation **132** qui a été préalablement chargé. Avec un maintien d'une commande d'ouverture sur l'appareil de coupure principal **121**, l'ouverture mécanique de l'appareil de coupure devient alors aisément une ouverture électrique, avec interruption effective de la circulation de courant lorsque le courant le traversant atteint la valeur nulle, un éventuel arc électrique étant coupé et ne s'opposant alors plus à la coupure électrique. Si, à la coupure de l'arc électrique, la distance entre contacts est suffisante, il est possible de couper définitivement le passage du courant. Le dimensionnement de cet appareil de coupure en termes de pouvoir de coupure peut ainsi être réduit.

Un tel dispositif de coupure de courant pourra par exemple être dimensionné pour des tensions continues au moins égales à 10 kV, voire au moins égales à 50 kV, typiquement au moins égales à 320 kV, et potentiellement au moins égales à 750kV. Un tel dispositif de coupure de courant pourra également être dimensionné pour un courant continu de service nominal au moins égal à 1 kA, voire au moins égal à 3 kA.

Le délai d'attente entre la détection de la surintensité et la génération de la commande d'ouverture de l'appareil de coupure principal **121** permet de garantir que le limiteur de courant **111** a atteint une phase de maintien du courant à son intensité limitée. Dans cette phase de maintien, la différence de potentiel aux bornes du limiteur de courant **111** a permis de charger les condensateurs d'accumulation **131, 132**. Le délai d'attente entre la détection de la surintensité et la génération de la commande d'ouverture de l'appareil de coupure principal **121** est par exemple au moins égal à 5 millisecondes, voire au moins égal à 10 millisecondes. Afin de de ne pas maintenir le limiteur de courant **111** pendant un temps excessif à son intensité limitée, le délai d'attente entre la détection de la surintensité et la génération de la commande d'ouverture de l'appareil de coupure principal **121** est par exemple au plus égal à 50 millisecondes, voire au plus égal à 20 millisecondes.

Dans le deuxième mode de fonctionnement, le circuit de commande **103** génère de préférence la commande de fermeture de l'interrupteur de commande d'oscillation **122** après la génération de la commande d'ouverture de l'appareil de coupure principal **121**. Ce décalage de temps pour la génération de la commande de fermeture de l'interrupteur de commande d'oscillation **122** permet de garantir que la formation du circuit oscillant induisant un passage à zéro du courant à travers l'appareil de coupure principal **121,** est bien obtenue alors que la commande d'ouverture de l'appareil de coupure principal **121** est appliquée et que l'ouverture par écartement des contacts de l'appareil de coupure principal **121** a bien été préalablement initiée.

Ce décalage de temps permet également de tenir compte du décalage entre l'application de la commande d'ouverture sur l'appareil de coupure principal **121** et l'effet de cette commande, pour un appareil de coupure principal **121** du type mécanique. Ce décalage entre la commande d'ouverture de l'appareil de coupure principal **121** et la commande de fermeture de l'interrupteur de commande d'oscillation **122** est par exemple au moins égal à 500 microsecondes, voire au moins égal à 5 millisecondes. Ce décalage est de préférence inférieur à 30 millisecondes. Afin de limiter au maximum le temps de fonctionnement du limiteur de courant **111** dans son état de limitation de courant à l'ntensité limitée, et afin de limiter le temps de présence d'un arc dans l'appareil de coupure principal **121** après l'application d'une commande d'ouverture, ce décalage entre les commandes est avantageusement au plus égal à 20 millisecondes, et de préférence au plus égal à 5 millisecondes.

La réduction du temps de fonctionnement du limiteur de courant **111** dans son état de limitation de courant durant le deuxième mode de fonctionnement pourra en outre faciliter une phase ultérieure de basculement vers le premier mode de fonctionnement, par une fermeture de l'appareil de coupure principal **121**. Un limiteur de courant de type résistif nécessitera un temps avant d'être à nouveau mis en service, d'autant plus important qu'il aura été échauffé longtemps dans son état de limitation de courant.

On notera qu'il n'y pas d'obligation d'avoir un décalage entre la détection de la surintensité et la commande d'ouverture sur l'appareil de coupure principal **121**. En revanche, il reste préférable d'avoir un intervalle de temps entre la détection de la surintensité et la commande de fermeture de l'interrupteur de commande d'oscillation **122,** qui donne le moment de la coupure électrique effective et doit donc intervenir après un certain temps, pour que les condensateurs soient chargés. Cet intervalle de temps, est de préférence compris dans la gamme allant de 500 microsecondes à 30 millisecondes, en fonction notamment du décalage de temps nécessaire entre la commande d'ouverture de l'appareil de coupure principal **121** et la commande de fermeture de l'interrupteur de commande d'oscillation **122**.

Dans l'exemple illustré à la **Fig. 1,** la ligne d'oscillation comprend un condensateur supplémentaire **134**. Dans l'exemple illustré, l'interrupteur de commande d'oscillation **122** est agencé entre le point de piquage **135** et le condensateur supplémentaire **134** de la ligne d'oscillation. De la sorte, tant que l'interrupteur de commande d'oscillation **122** est maintenu dans son état ouvert, le condensateur supplémentaire **134** est déconnecté électriquement de la ligne d'accumulation **130** par l'interrupteur **122**. Dans l'exemple illustré, le condensateur supplémentaire **134** de la ligne d'oscillation est agencé entre l'interrupteur de commande d'oscillation **122** et la bobine **133.** Cependant, un agencement inverse pourrait être envisagé. Par ailleurs, le condensateur supplémentaire **134,** qui se trouve électriquement en parallèle de l'appareil de coupure principal **121,** permet de renforcer la coupure du courant continu dans la ligne d'oscillation **142** lorsqu'on a obtenu l'ouverture électrique de l'appareil de coupure principal **121.** Toutefois, ce condensateur supplémentaire **134** n'est pas indispensable au fonctionnement de l'invention comme cela est illustré dans l'exemple de réalisation de la **Fig. 2** qui illustre un dispositif de coupure **1** en tout point identique à celui qui vient d'être décrit, à ceci près qu'il ne comprend aucun condensateur dans la ligne d'oscillation **142** entre le point de piquage **135** et son point de liaison à la ligne de conduction principale **141.**

La fréquence de résonance du circuit oscillant formé est avantageusement inférieure ou égale à 10 kHz. Ainsi, avec I le courant traversant l'appareil de coupure principal **121,** la valeur dI/dt (par exemple inférieure ou égale à 500 A/microseconde) est suffisamment réduite pour faciliter l'ouverture effective de l'appareil de coupure principal **121** lors du maintien de sa commande d'ouverture. Avantageusement, la fréquence de résonance du circuit oscillant formé est supérieure ou égale à 500 Hz pour obtenir une ouverture effective rapide de l'appareil de coupure principal **121** ou pour générer plusieurs passages à zéro du courant à travers l'appareil de coupure principal **121,** si celui-ci n'est pas ouvert immédiatement. Un exemple de dimensionnement du circuit oscillant est détaillé par la suite en référence aux modes de réalisation de la **Fig. 1.**

La détermination des caractéristiques des condensateurs d'accumulation **131, 132,** de l'éventuel condensateur **134,** et de l'inductance **133,** de valeur L, pourra être réalisée de la façon suivante.

On fixe tout d'abord la valeur Fr de la fréquence de résonance que l'on souhaite pour le circuit oscillant ainsi que la valeur Io de l'amplitude minimale d'une oscillation lors de la fermeture de l'interrupteur de commande d'oscillation **122.** Io doit respecter la condition Io > Inl, avec Inl l'intensité limitée par le limiteur de courant **111.** Inl est par exemple égale à deux fois l'intensité nominale du courant nominal du dispositif de coupure **1.**

Pour l'exemple de la **Fig. 1,** on obtient les équations suivantes :

$$Fr = \frac{1}{2\pi\sqrt{L * Ceq}}$$

$$Io = Vnl * \sqrt{Ceq / L}$$

$$\frac{1}{Ceq} = \frac{1}{C132} + \frac{1}{C134}$$

Avec :

Vnl : la différence de potentiel entre les bornes du limiteur de courant **111** lorsqu'il maintient le courant à sa valeur d'intensité limitée Inl,
Ceq : la capacité équivalente des condensateurs **132** et **134** en série dans le circuit oscillant formé,
C132 la capacité du condensateur **132,**
C134 la capacité du condensateur **134,** (En l'absence de condensateur supplémentaire **134,** Ceq vaut C132)
et L la valeur d'inductance de l'inductance **133.**

Après une ouverture de l'appareil de coupure principal **121,** le circuit de commande **103** peut ensuite appliquer une commande d'ouverture sur l'interrupteur de commande d'oscillation **122.** Cette commande d'ouverture est par exemple réalisée après un temps suffisant pour que l'appareil de coupure principal **121** ait pu s'ouvrir électriquement et que le courant traversant la borne de sortie **102** soit nul. Cette commande d'ouverture pourra par exemple être décalée d'une durée au moins égale à 5 millisecondes par rapport à la commande de fermeture de ce même interrupteur de commande d'oscillation **122,** ce décalage étant par exemple de 25 millisecondes. L'ouverture de l'interrupteur commande d'oscillation **122** permettra de former à nouveau le circuit oscillant après une remise en conduction du dispositif de coupure **1.**

La **Fig. 3** illustre un troisième exemple d'un dispositif de coupure **1** selon l'invention. Dans ce mode de réalisation, on a prévu de connecter, à chacune des bornes **101, 102** du dispositif **1,** un parasurtenseur **151, 152** connecté électriquement entre la borne **101, 102** considérée et la terre. La structure des autres composants du dispositif de coupure **1** de la **Fig. 3** est par ailleurs identique à celle du dispositif de coupure de la **Fig. 1.** La même variante peut être apportée à un dispositif de coupure tel qu'illustré à la **Fig. 2.**

La plupart des surintensités sont transitoires et ne sont pas liées à un court-circuit permanent. Par conséquent, le dispositif de coupure **1** est avantageusement configuré pour mettre en œuvre un cycle de type OFO (ouvert-fermé-ouvert), l'ouverture de l'appareil de coupure principal **121** dans le deuxième mode de fonctionnement étant suivie d'une décharge du condensateur d'accumulation **132** et d'une tentative de fermeture de cet appareil de coupure principal **121** pour déterminer si le défaut est persistant, puis d'une nouvelle ouverture de cet appareil de coupure principal **121** si on a déterminé que le défaut est effectivement persistant.

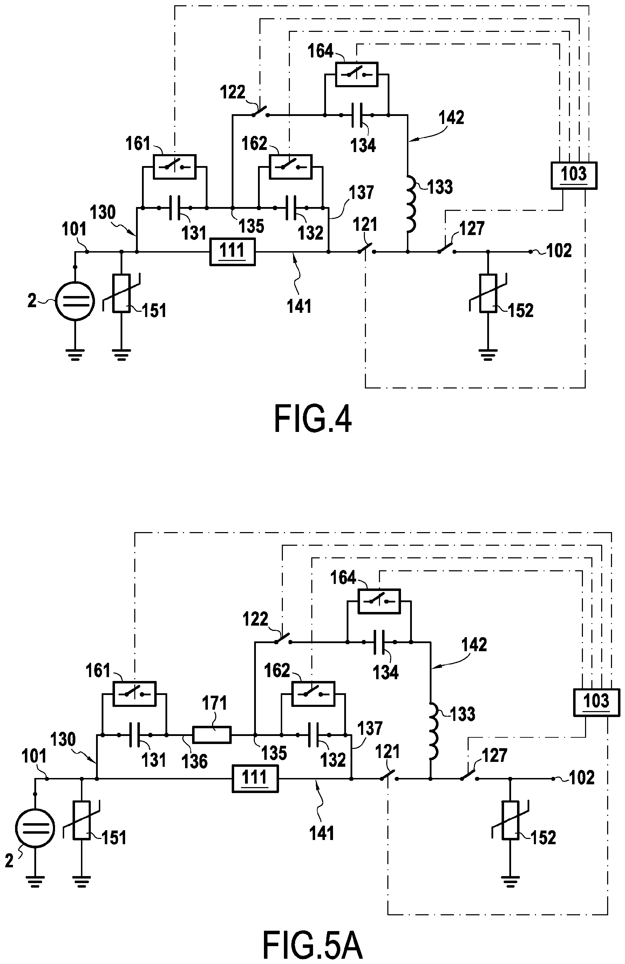

On a illustré à la **Fig. 4** un quatrième exemple de réalisation dans lequel on a prévu des systèmes de décharge **161, 162, 164** des condensateurs du dispositif de coupure **1**. L'exemple Illustré est dérivé du premier exemple de réalisation illustré à la **Fig. 1,** mais le même principe pourrait être utilisé pour les autres exemples de réalisation décrits ci-dessus ou ci-dessous.

Dans l'exemple illustré, chacun des condensateurs d'accumulation **131, 132,** et en l'occurrence aussi le condensateur supplémentaire **134** de la ligne d'oscillation **142,** sont munis chacun d'un système de décharge dédié au condensateur considéré. Toutefois, en variante, on pourrait prévoir que seul un ou plusieurs de l'ensemble des condensateurs soit pourvus d'un système de décharge. De même, on pourrait prévoir que plusieurs condensateurs, ou tous les condensateurs du dispositif de coupure **1** soient pourvus d'un système de décharge commun.

Un système de décharge **161, 162, 164** de condensateur est un système qui permet d'annuler la différence de potentiel entre les deux armatures du condensateur considéré. Il s'agit par exemple d'un circuit électrique commandé qui, dans une configuration de décharge, relie entre elles les deux armatures du condensateur considéré. Très simplement, il peut s'agir d'un circuit électrique de décharge reliant les deux armatures du condensateur considéré, ce circuit électrique de décharge comportant un interrupteur de commande de décharge qui, dans un état ouvert, définit une configuration inactive du système de décharge, permettant la charge du condensateur considéré, et qui, dans un état fermé, définit la configuration de décharge du système de décharge, assurant la décharge du condensateur au travers du circuit de décharge. Le circuit de décharge peut éventuellement comporter des composants résistifs. De préférence, chaque système de décharge, par exemple l'interrupteur de commande de décharge, est commandé par le circuit électronique de commande **103** du dispositif de coupure **1**. Le système de décharge permet de remettre à zéro le dispositif de coupure entre deux opérations de coupure par le dispositif de coupure **1**. La présence d'un ou plusieurs système de décharge de condensateur du dispositif de coupure **1** est de préférence assodée à la présence d'un organe d'isolement **127**, de préférence de type sectionneur, dans la ligne de conduction principale **141**. Dans l'exemple de réalisation illustrée à la **Fig. 4,** un tel organe d'isolement **127** est agencé en aval du limiteur de courant **111,** de l'appareil de coupure principal **121** et du point de liaison de la deuxième extrémité de la ligne d'oscillation **142** avec la ligne de conduction principale **141,** L'organe d'isolement **127** peut être intégré dans le dispositif de coupure **1,** comme dans le mode de réalisation de la **Fig. 4.** Il peut aussi être agencé en aval de celui-ci, de préférence directement connecté à la borne aval **102** du dispositif de coupure **1**. L'organe d'isolement **127** est de préférence commandé entre un état ouvert et un état fermé par l'unité électronique de commande **103** du dispositif de coupure **1**.

Dans un dispositif tel que celui illustré à la **Fig. 4,** la remise à zéro des condensateurs est opérée comme suit Lorsqu'une première ouverture de l'appareil de coupure principal **121** a été réalisée comme décrit ci-dessus, on commande l'organe d'Isolement **127** dans son état ouvert pour empêcher toute circulation du courant nominal dans la ligne de conduction principale, même après fermeture de l'appareil de coupure principal **121**. Lorsque l'organe d'isolement **127** est ouvert, les condensateurs d'accumulation **131, 132,** et un éventuel condensateur supplémentaire **134** dans la ligne d'oscilation **142,** sont isolés électriquement de tout circuit situé en aval de l'organe d'isolement **127**. Il est alors possible de remettre à zéro les condensateurs équipés d'un système de décharge **161, 162, 164**. Une fois les condensateurs déchargés, on peut ouvrir l'nterrupteur de commande d'oscillation **122** puis refermer l'appareil de coupure principal **121**. La séquence se termine par la fermeture de l'organe d'isolement **127** qui rétablit alors la circulation du courant dans la ligne de conduction principale **141**. De la sorte, en cas de présence d'un défaut, le dispositif de coupure **1** est immédiatement opérationnel dans un état connu.

On a illustré sur la **Fig. 5A** un cinquième exemple de réalisation de l'invention dans lequel on a prévu, en série dans le tronçon primaire **136** de la ligne d'accumulation **130,** une résistance additionnelle **171** agencée entre le premier condensateur d'accumulation **131** et le point de piquage **135** où la ligne d'oscillation **142** est raccordée électriquement à la ligne d'accumulation **130**. Cette résistance additionnelle **171** permet d'éviter ou de limiter fortement l'interaction du premier condensateur d'accumulation **131** avec le circuit oscillant lorsque celui-ci se décharge dans le second mode de fonctionnement du dispositif de coupure. L'exemple illustré est dérivé du quatrième exemple de réalisation illustré à la **Fig. 4,** mais le même principe pourrait être utilisé pour les autres exemples de réalisation décrits ci-dessus ou ci-dessous.

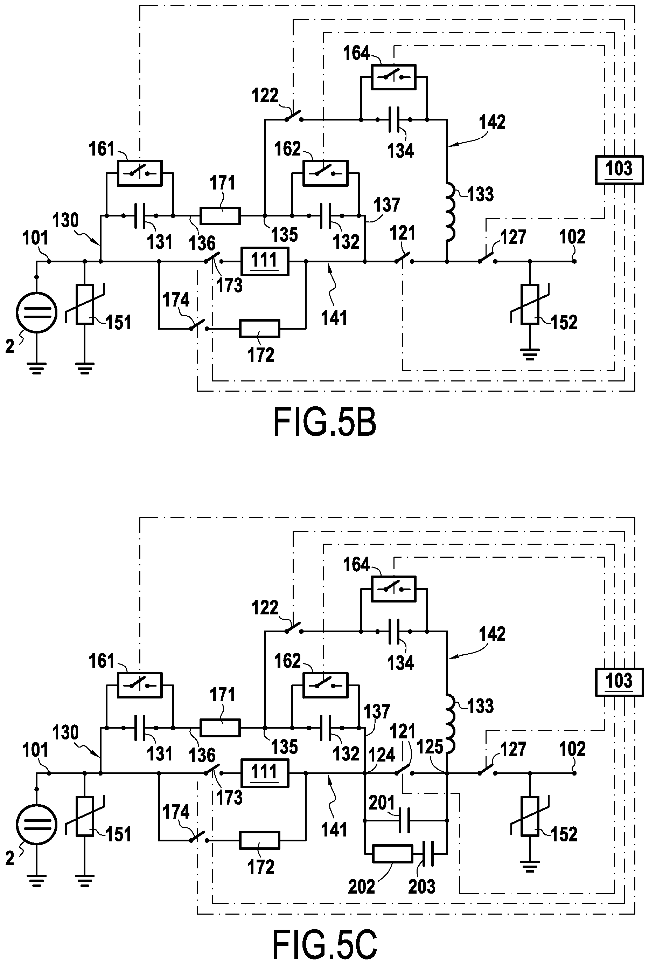

On a illustré sur la **Fig. 5B** une variante du cinquième exemple de réalisation de l'invention dans lequel on a prévu une résistance **172** en parallèle au limiteur de courant **111,** de préférence en combinaison avec des organes de coupure ou de commutation, par exemple des sectionneurs **173, 174** permettant d'orienter la circulation du courant soit dans le limiteur de courant **111,** soit dans la résistance parallèle **172**. Ce mode de réalisation permet de faire passer le courant à travers cette résistance pendant le temps de récupération du limiteur après une transition. L'exemple illustré est dérivé du cinquième exemple de réalisation illustré à la **Fig. 5A,** mais le même principe pourrait être utilisé pour les autres exemples de réalisation décrits ci-dessus ou ci-dessous.

Bien que non représenté sur les figures, on peut prévoir qu'un des condensateurs, plusieurs condensateurs, ou tous les condensateurs du dispositif soi(en)t équipé(s) d'un parasurtenseur électriquement en parallèle du condensateur considéré. Un tel parasurtenseur permet de limiter l'amplitude de la différence de potentiel aux bornes du condensateur considéré et permet d'absorber l'énergie inductive stockée dans l'installation. De même, on peut prévoir un parasurtenseur électriquement en parallèle de la bobine **133**.

De même, dans les différents modes de réalisation, on peut envisager, pour la même raison, de disposer, électriquement en parallèle aux bornes de l'appareil de coupure principal **121**, un parasurtenseur ou un circuit dit « snubber » comportant un condensateur et une résistance en série. Ce cas de figure est illustré à titre d'exemple à la **Fig. 5C**. Dans cet exemple, le circuit dit « snubber » comporte, en parallèle de l'appareil de coupure principal **121,** un condensateur **201,** lui-même en parallèle avec au moins un circuit comportant en série une résistance **202** et un condensateur **203**. Les valeurs des composants sont adaptées pour obtenir une Impédance du circuit «snubber» en fonction de la fréquence qui réduit la tension transitoire de rétablissement (dite TTR) aux bornes de l'appareil de coupure principal **121**, afin d'encore limiter le risque d'un réamorçage de l'appareil de coupure principal **121.**

Dans les exemples de réalisation décrits ci-dessus, on obtient une coupure particulièrement rapide et fiable en cas de défaut franc dans lequel on a une augmentation brutale de l'intensité du courant circulant dans la ligne de conduction principale **141**. Dans ce type de défaut, un courant de défaut s'échappe, par exemple vers la terre, au travers d'un défaut ayant une impédance électrique nulle ou faible. En effet, cette augmentation brutale se traduit par l'apparition très rapide d'une différence de potentiel aux bornes du limiteur de courant **111,** ce qui permet de charger rapidement les condensateurs d'accumulation **131 132**, et donc permet rapidement de déclencher la décharge du condensateur d'accumulation **132** dans le circuit oscillant pour couper le courant au travers de l'appareil de coupure principal **121.**

En revanche, les circuits ci-dessus, pris isolément, sont moins performants dans le cas de défaut électrique généralement appelé défaut impédant. Dans ce type de défaut, un courant de défaut s'échappe, par exemple vers la terre, au travers d'un défaut ayant une impédance électrique non négligeable. Lors de l'apparition de tels défauts, l'augmentation de l'intensité dans la ligne de conduction principale peut être plus lente, de telle sorte qu'il s'écoule un délai avant l'apparition d'une différence de potentiel suffisante aux bornes du limiteur de courant **111** pour provoquer la charge des condensateurs d'accumulation **131, 132**. Il s'ensuit qu'il faut un certain temps pour pouvoir éventuellement déclencher la décharge dans le circuit oscillant. Dans certains cas, lorsque l'intensité dans la ligne de conduction principale **141** reste inférieure à l'intensité de seuil, on n'obtient pas la charge nécessaire des condensateurs d'accumulation. De même, les circuits décrits ci-dessus ne permettent pas de faire intervenir le circuit oscillant dans le cas d'une coupure volontaire par ouverture de l'appareil de coupure principal **121** en l'absence de défaut. En effet, dans une telle hypothèse, l'intensité du courant dans la ligne de conduction principale est inférieure ou égale à l'intensité nominale de sorte que le limiteur de courant n'entre pas en action et ne génère pas de différence de potentiel pour charger les condensateurs d'accumulation **131, 132.**

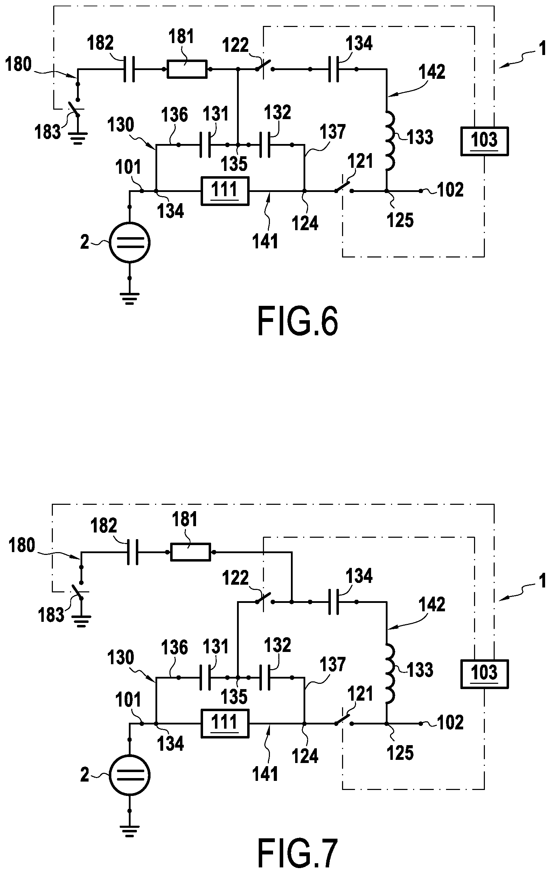

Aussi, le sixième mode et le septième mode de réalisation d'un dispositif de coupure selon l'invention, illustrés respectivement aux **Figures 6** et **7**, comportent un circuit de charge **180** permettant de charger au moins un condensateur du circuit oscillant d'accumulation **131, 132**, même en l'absence d'une différence de potentiel aux bornes du limiteur de courant **111**. Les exemples illustrés aux **Figs. 6** et **7** sont basés sur le premier exemple de réalisation du dispositif de coupure illustré à la **Fig. 1**, mais l'adjonction d'un circuit de charge **180** peut bien entendu être réalisée pour tous les autres exemples de réalisation décrits ci-dessus.

De préférence, le circuit de charge **180** est un circuit de charge commandé, par exemple commandé par l'unité électronique de commande **103** du dispositif de coupure **1**. Pour cela, le circuit de charge **180** présente de préférence un interrupteur de commande de charge **183**, qui est de préférence commandé électriquement par l'unité électronique de commande **103**.

Le circuit de charge **180** permet de relier, de manière commandée, le circuit d'oscillation à la terre pour provoquer le chargement rapide d'un ou plusieurs des condensateurs présents dans le circuit oscillant. Pour cela, le circuit de charge **180** peut utiliser un potentiel électrique présent dans le circuit oscillant lors du fonctionnement nominal de l'installation, c'est-à-dire lorsque le dispositif de coupure **1** est dans son premier mode de fonctionnement.

Dans les exemples illustrés, le circuit de charge **180** comporte un condensateur de charge **182** dont une armature est reliée électriquement au circuit d'oscillation et dont l'autre armature est reliée sélectivement, par l'intermédiaire de l'interrupteur de commande de charge **183**, à la terre.

Dans l'exemple de réalisation de la **Fig. 6**, le condensateur de charge **182** est ainsi relié électriquement de manière permanente au point de piquage **135** situé entre les deux condensateurs d'accumulation **131, 132** de la ligne d'accumulation **130**. On comprend que lorsque l'interrupteur de commande de charge **183** est fermé, un potentiel électrique apparaît au point de piquage qui permet de charger les condensateurs d'accumulation **131, 132**. L'interrupteur de commande d'oscillation **122** n'est pas agencé entre le circuit de charge **180** et le point de piquage **135**. Ce mode de réalisation fonctionne de la même manière dans un dispositif de coupure **1** tel qu'illustré à la **Fig. 2**, dépourvu de condensateur supplémentaire **134** dans la ligne d'oscillation **142**.

Dans l'exemple de réalisation de la **Fig. 7**, le condensateur de charge **182** est relié électriquement de manière permanente à la ligne d'oscillation **142** en un point qui est séparé du point de piquage **135** par l'interrupteur de commande d'oscillation **122**. Dans ce mode de réalisation, on comprend que, lorsque l'interrupteur de commande de charge **183** est fermé, on provoque la charge du condensateur supplémentaire **134** qui, dans le circuit oscillant, au moment de la fermeture de l'interrupteur de commande d'oscillation **122,** joue le rôle d'un condensateur d'accumulation qui se décharge dans le circuit oscillant.

Dans les deux cas, on prévoit avantageusement une résistance électrique de charge **181** dans le circuit de charge. De préférence, la résistance électrique de charge **181** est agencée en série entre le condensateur de charge **182** et le circuit oscillant. La résistance de charge permet de limiter le courant d'appel lors de l'activation du circuit de charge qui correspond à la fermeture de l'interrupteur de commande de charge **183.** Elle permet aussi d'éviter que le circuit de charge n'interfère trop durant le processus d'oscillation qui mène à la coupure de courant par l'appareil de coupure principal **121.** De même, on pourrait prévoir, dans le circuit de charge, un transformateur, pour abaisser la tension et ainsi ralentir la charge.

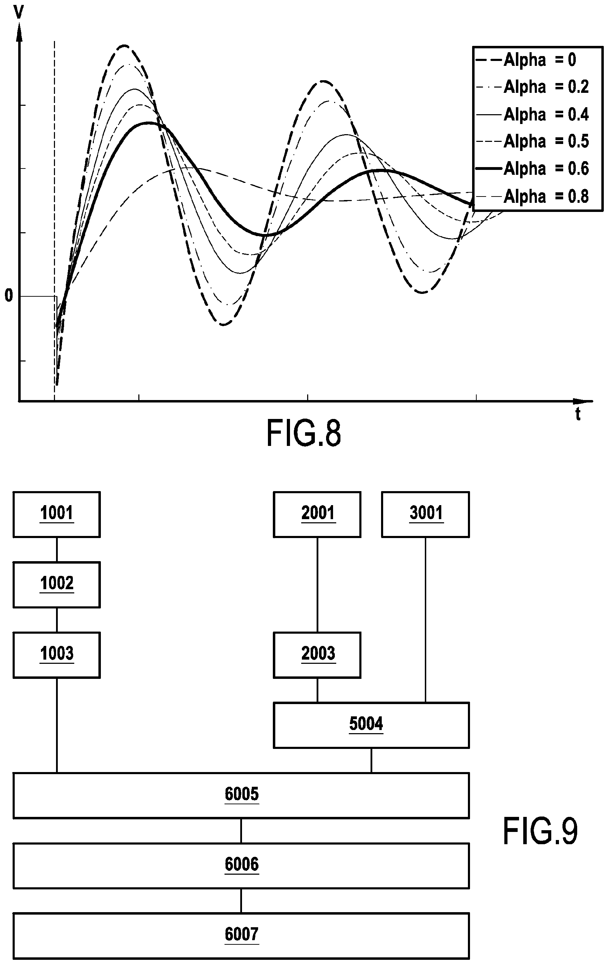

On a illustré sur la **Fig. 9** le déroulement d'une séquence d'ouverture d'un dispositif de coupure **1** selon l'invention.

La première branche de la séquence est commune à toutes les modes de réalisation de l'invention décrit ci-dessus. Cette première branche débute à l'étape **1001** par l'apparition d'un défaut franc dans l'installation électrique. Ce défaut franc provoque l'apparition, à l'étape **1002,** d'une différence de potentiel aux bornes du limiteur de courant **111,** laquelle permet la charge des condensateurs d'accumulation **131, 132.** À l'étape **1003,** le défaut de type franc est détecté, par exemple par détection de l'apparition de cette différence de potentiel aux bornes du limiteur de courant **111.**

À partir de là, on peut déclencher, comme décrit plus haut, à l'étape **6005,** l'ouverture mécanique de l'appareil de coupure principal **121,** puis, à l'étape **6006,** la fermeture de l'interrupteur de commande d'oscillation **122,** ce qui permet d'aboutir, à l'étape **6007** à l'ouverture électrique effective de l'appareil de coupure principal **121,** par disparition de tout arc électrique dans l'appareil **121** qui est dans son état ouvert.

La deuxième et la troisième branche de la séquence sont spécifiques aux modes de réalisation de l'invention qui comprennent un circuit de charge **180** tel que décrit en rapport avec les **Figs. 6** et **7.**

La deuxième branche de la séquence débute à l'étape **2001** par l'apparition d'un défaut électrique de type impédant dans l'installation électrique. Ce défaut impédant est détecté à l'étape **2003** de manière connue en soi, par exemple par une mesure de l'intensité circulant dans la ligne de conduction principale **141.** À l'étape **5004,** on déclenche la fermeture de l'interrupteur de commande de charge **183** afin de provoquer la charge d'un condensateur. Ensuite, de préférence après un délai de charge suffisant à compter de la fermeture de l'interrupteur de commande de charge **183,** on provoque, comme dans le cadre de la première branche de la séquence, l'ouverture de l'appareil de coupure principal **121** à l'étape **6005.** L'enchaînement se poursuit par les étapes **6006** et **6007** décrites pour la première branche de la séquence.

La troisième branche de la séquence correspond à une décision de coupure programmée, à l'étape **3001,** en l'absence de tout défaut électrique. Dans ce cas, la séquence d'ouverture débute à l'étape **5004** de fermeture de l'interrupteur de commande de charge **183,** et se poursuit par les étapes **6005, 6006** et **6007** selon le même ordonnancement que décrit en référence à la deuxième branche.

Dans le cadre des modes de réalisation comprenant un circuit de charge **180,** on peut avantageusement prévoir d'ajouter un contacteur aux bornes du limiteur de courant **111,** pour court-circuiter le limiteur dans le cas d'une coupure programmée sans défaut ou dans le cas de la détection d'un défaut de type impédant. Cela permet d'éviter une transition du limiteur de courant **111** qui pourrait intervenir suite à l'apparition des courants et tension transitoires lors de la coupure. Le contacteur serait fermé juste avant l'étape **5004** de déclenchement de la fermeture de l'interrupteur de commande de charge **183.**

Les modes de réalisation comprenant un circuit de charge **180** ont l'avantage de permettre une coupure effective de la circulation du courant dans la ligne de conduction principale **141** quel que soit le défaut envisagé, y compris en l'absence de défaut, dans des délais maîtrisés, tout en optimisant le dimensionnement des composants du dispositif de coupure **1.**

Dans les différents modes de réalisation illustrés, on peut envisager de connecter un limiteur de courant additionnel (non Illustré) en série entre les bornes **101** et **102.** Un tel limiteur de courant additionnel pourra être de type résistif ou inductif et permettra de modifier le dimensionnement des différents interrupteurs du dispositif de coupure de courant **1.**

Pour illustrer les avantages de l'invention par rapport au dispositif décrit dans WO-2016/092182, on introduit un paramètre Alpha=C132/(C131+C132) qui reflète la proportion de chaque capacité électrique dans le pont de condensateurs formé par les condensateurs d'accumulation **131** et **132.** Si l'un des deux tronçons **136, 137** comporte plusieurs condensateurs, on considère la capacité électrique équivalente. En d'autres termes, C131 représente la capacité électrique équivalente du tronçon primaire de la ligne d'accumulation, et C132 représente la capacité électrique équivalente du tronçon secondaire de la ligne d'accumulation **130.** Ce paramètre peut prendre diverses valeurs entre 0 et 1 en fonction des valeurs des capacités électriques C131 et C132. La **Fig. 8** présente différentes courbes Illustrant les variations relatives de tension (tension transitoire de rétablissement - TTR) aux bornes de l'appareil de coupure principal **121,** après la coupure électrique effective, pour le montage de la **Fig. 2,** chacune pour une valeur différente du paramètre Alpha.

Sur cette **Fig. 8,** on volt l'influence très élevée du paramètre Alpha sur la tension transitoire de rétablissement (TTR) aux bornes de l'appareil de coupure principal **121**. Ces courbes tendent à montrer qu'un effet favorable mesurable sur la tension transitoire de rétablissement (TTR) est obtenu avec des condensateurs d'accumulation **131, 132** dont les valeurs de capacité électrique permettent d'obtenir une valeur du paramètre Alpha supérieure ou égale à 0,2. Cependant, ces courbes tendent à montrer qu'il est avantageux choisir des condensateurs d'accumulation **131, 132** dont les valeurs de capacité électrique permettent d'obtenir une valeur du paramètre Alpha supérieure à 0,4, de préférence supérieure à 0,5.

Toutefois, on s'est par ailleurs aperçu que pour, pour contenir les coûts des composants dans le dispositif de coupure **1** dans des valeurs économiquement acceptables, il était intéressant de choisir des condensateurs d'accumulation **131, 132** dont les valeurs de capacité électrique permettent d'obtenir une valeur du paramètre Alpha inférieure ou égale à 0,9, de préférence, inférieure ou égale à 0,8.

De la sorte, il apparait qu'il est intéressant de choisir des condensateurs d'accumulation **131, 132** dont les valeurs de capacité électrique permettent d'obtenir une valeur du paramètre Alpha dans la gamme allant de 0,4 à 0,9, de préférence dans la gamme allant de 0,4 à 0,8, plus préférentiellement dans la gamme allant de 0,5 à 0,8.

L'invention n'est pas limitée aux exemples décrits et représentés car diverses modifications peuvent y être apportées sans sortir de son cadre défini par les revendications ci-après.

## Revendications

1. Dispositif de coupure de courant **(1)** pour courant continu haute tension,

   - comprenant :

     • une première borne **(101)** et une deuxième borne **(102)** ;
     • une ligne de conduction principale **(141)** qui s'étend entre les première et deuxième bornes et qui comprend, en série, un appareil de coupure de courant principal **(121)**, ayant une première borne **(124)** et une deuxième borne **(125)**, et un limiteur de courant **(111)** configuré pour limiter tout courant le traversant dont l'intensité dépasse une valeur dite intensité de seuil à une valeur dite intensité limitée;
     • une ligne d'accumulation **(130)**, connectée à ses deux extrémités à la ligne de conduction principale **(141)**, électriquement en parallèle du limiteur de courant **(111)**, et comprenant au moins un condensateur d'accumulation ;

     • une ligne d'oscillation **(142)**, électriquement en parallèle de l'appareil de coupure principal **(121)** par rapport à la ligne de conduction principale **(141)**, comprenant un interrupteur de commande d'oscillation **(122)** et ayant une inductance **(133)** ;

     - dans lequel tout ou partie de la ligne de conduction principale **(141)**, de la ligne d'accumulation **(130)** et de la ligne d'oscillation **(142)** forment, aux bornes de l'appareil de coupure principal **(141)**, un circuit oscillant lorsque l'interrupteur de commande d'oscillation **(122)** est amené dans un état fermé ;
     - et dans lequel le dispositif **(1)** présente un premier mode de fonctionnement dans lequel l'appareil de coupure principal **(121)** est dans un état fermé et l'interrupteur de commande d'oscillation **(122)** est dans un état ouvert, et au moins un deuxième mode de fonctionnement dans lequel l'appareil de coupure principal **(121)** est commandé vers un état ouvert et l'interrupteur de commande d'oscillation **(122)** est commandé vers un état fermé,

   **caractérisé en ce que**
   la ligne d'accumulation **(130)** comporte au moins un premier condensateur d'accumulation **(131)** et un deuxième condensateur d'accumulation **(132)**, et **en ce que** la ligne d'oscillation s'étend depuis un point de piquage **(135)** de la ligne d'accumulation situé entre les deux condensateurs d'accumulation **(131, 132)**, déterminant un tronçon primaire **(136)** et un tronçon secondaire **(137)** de la ligne d'accumulation **(130)**, le tronçon secondaire **(137)** étant relié à la ligne de conduction principale **(141)** entre le limiteur de courant **(111)** et l'appareil de coupure principal **(121)** de manière à faire partie du circuit oscillant.

2. Dispositif de coupure de courant **(1)** selon la revendication **1**, **caractérisé en ce qu'**il comporte au moins un parasurtenseur connecté à l'une au moins de la première borne **(101)** et de la deuxième borne **(102)** du dispositif, de préférence un premier parasurtenseur **(151)** connecté à la première borne **(101)** et un deuxième parasurtenseur **(152)** connecté à la deuxième borne **(102)** du dispositif.

3. Dispositif de coupure de courant **(1)** selon l'une des revendications précédentes, **caractérisé en ce que** ladite ligne de d'oscillation **(142)** comprend un condensateur d'oscillation supplémentaire **(134)** connecté en série avec ledit interrupteur de commande d'oscillation **(122)**.

4. Dispositif de coupure de courant **(1)** selon l'une quelconque des revendications précédentes, **caractérisé en ce que** le dispositif **(1)** comporte, en série dans le tronçon primaire **(136)** de la ligne d'accumulation **(130)**, une résistance additionnelle **(171)** agencée entre le premier condensateur d'accumulation **(131)** et le point de piquage **(135)** où la ligne d'oscillation **(142)** est raccordée électriquement à la ligne d'accumulation **(130)**.

5. Dispositif de coupure de courant **(1)** selon l'une quelconque des revendications précédentes, **caractérisé en ce que** le dispositif **(1)** comporte un circuit de charge **(180)** reliant, de manière commandée, le circuit d'oscillation à la terre pour provoquer le chargement rapide d'un ou plusieurs condensateur du circuit oscillant.

6. Dispositif de coupure de courant **(1)** selon la revendication **5, caractérisé en ce que** le circuit de charge **(180)** comporte un interrupteur de commande de charge **(183)**.

7. Dispositif de coupure de courant **(1)** selon la revendication **6, caractérisé en ce que** le circuit de charge (**180**) comporte un condensateur de charge **(182)** dont une armature est reliée électriquement au circuit oscillant et dont l'autre armature est reliée sélectivement, par l'intermédiaire de l'interrupteur de commande de charge **(183)**, à la terre.

8. Dispositif de coupure de courant **(1)** selon l'une des revendications **5** à **7, caractérisé en ce que** le circuit de charge **(180)** comporte une résistance électrique de charge **(181)**.

9. Dispositif de coupure de courant **(1)** selon l'une quelconque des revendications précédentes, **caractérisé en ce qu'**une résistance **(172)** est disposée en parallèle du limiteur de courant **(111)**, et est associée à un ou plusieurs organes de coupure ou de commutation permettant la circulation du courant du circuit de conduction principal **(141)** soit par le limiteur de courant **(111)** soit par la résistance parallèle **(172)**.

10. Dispositif de coupure de courant **(1)** selon l'une quelconque des revendications précédentes, **caractérisé en ce que** ledit limiteur de courant **(111)** est du type résistance supraconductrice.

11. Dispositif de coupure de courant **(1)** selon l'une quelconque des revendications précédentes, **caractérisé en ce qu'**il comporte un circuit électronique de commande **(103)** apte à commander l'appareil de coupure principal **(121)** et l'interrupteur de commande d'oscillation **(122)** vers leur état ouvert ou vers leur état fermé.

12. Dispositif de coupure de courant **(1)** selon l'une quelconque des revendications précédentes, **caractéri-**

**sé en ce que** ledit circuit de commande **(103)** est configuré pour détecter une surintensité dans le premier mode de fonctionnement et configuré pour générer un signal d'ouverture de l'appareil de coupure principal **(121)** au plus tard 100 millisecondes après ladite détection de la surintensité.

13. Dispositif de coupure de courant **(1)** selon l'une quelconque des revendications précédentes, **caractérisé en ce que** ledit circuit de commande **(103)** dans le deuxième mode de fonctionnement est configuré pour générer un signal d'ouverture de l'appareil de coupure principal **(121)** et configuré pour générer un signal de fermeture de l'interrupteur de commande d'oscillation **(122)** après la génération du signal d'ouverture de l'appareil de coupure principal **(121)**.

14. Dispositif de coupure de courant **(1)** selon l'une quelconque des revendications précédentes, **caractérisé en ce qu'**un parasurtenseur est connecté électriquement en parallèle d'au moins un condensateur d'accumulation **(131, 132)**.

15. Dispositif de coupure de courant **(1)** selon l'une quelconque des revendications précédentes, **caractérisé en ce qu'**il comporte un circuit « snubber » raccordé électriquement en parallèle aux bornes **(124, 125)** de l'appareil de coupure principal **(121)**.

**Patentansprüche**

1. Stromunterbrechungsvorrichtung (1) für Hochspannungsgleichstrom,

- umfassend:

• einen ersten Anschluss (101) und einen zweiten Anschluss (102),
• eine Hauptübertragungsleitung (141), die sich zwischen dem ersten und dem zweiten Anschluss erstreckt und die in Reihe eine Hauptstromunterbrechungseinrichtung (121), die einen ersten Anschluss (124) und einen zweiten Anschluss (125) aufweist, und einen Strombegrenzer (111) umfasst, der dazu ausgestaltet ist, jeden ihn durchfließenden Strom, dessen Stärke einen sogenannten Stärkeschwellenwert überschreitet, auf einen sogenannten begrenzten Stärkewert zu begrenzen,
• eine Akkumulationsleitung (130), die an ihren zwei Enden mit der Hauptübertragungsleitung (141) elektrisch parallel zu dem Strombegrenzer (111) verbunden ist und mindestens einen Akkumulationskondensator umfasst,
• eine Schwingungsleitung (142), elektrisch parallel zu der Hauptunterbrechungseinrichtung (121) in Bezug auf die Hauptübertragungsleitung (141), die einen Schwingungssteuerschalter (122) umfasst und eine Induktivität (133) aufweist,

- wobei die gesamte Hauptübertragungsleitung (141), Akkumulationsleitung (130) und Schwingungsleitung (142) oder ein Teil davon an den Anschlüssen der Hauptunterbrechungseinrichtung (141) einen Schwingkreis bilden, wenn der Schwingungssteuerschalter (122) in einen geschlossenen Zustand gebracht wird,
- und wobei die Vorrichtung (1) einen ersten Betriebsmodus, in dem die Hauptunterbrechungseinrichtung (121) sich in einem geschlossenen Zustand befindet und der Schwingungssteuerschalter (122) sich in einem offenen Zustand befindet, und mindestens einen zweiten Betriebsmodus aufweist, in dem die Hauptstromunterbrechungseinrichtung (121) hin zu einem offenen Zustand gesteuert wird und der Schwingungssteuerschalter (122) hin zu einem geschlossenen Zustand gesteuert wird,

**dadurch gekennzeichnet, dass**
die Akkumulationsleitung (130) mindestens einen ersten Akkumulationskondensator (131) und einen zweiten Akkumulationskondensator (132) einschließt, und dadurch, dass die Schwingungsleitung sich ausgehend von einem Abzweigpunkt (135) der Akkumulationsleitung erstreckt, der sich zwischen den zwei Akkumulationskondensatoren (131, 132) befindet, wodurch eine Primärsektion (136) und eine Sekundärsektion (137) der Akkumulationsleitung (130) bestimmt werden, wobei die Sekundärsektion (137) mit der Hauptübertragungsleitung (141) derart zwischen dem Strombegrenzer (111) und der Hauptunterbrechungseinrichtung (121) verbunden ist, dass sie Teil des Schwingkreises ist.

2. Stromunterbrechungsvorrichtung (1) nach Anspruch 1, **dadurch gekennzeichnet, dass** sie mindestens einen Überspannungsableiter einschließt, der mit mindestens einem von dem ersten Anschluss (101) und dem zweiten Anschluss (102) der Vorrichtung verbunden ist, wobei vorzugsweise ein erster Überspannungsableiter (151) mit dem ersten Anschluss (101) und ein zweiter Überspannungsableiter (152) mit dem zweiten Anschluss (102) der Vorrichtung verbunden ist.

3. Stromunterbrechungsvorrichtung (1) nach einem der vorhergehenden Ansprüche, **dadurch gekennzeichnet, dass** die Schwingungsleitung (142) einen zusätzlichen Schwingungskondensator (134) umfasst, der mit dem Schwingungssteuerschalter (122) in Reihe geschaltet ist.

4. Stromunterbrechungsvorrichtung (1) nach einem der vorhergehenden Ansprüche, **dadurch gekennzeichnet, dass** die Vorrichtung (1) in Reihe in der Primärsektion (136) der Akkumulationsleitung (130) einen zusätzlichen Widerstand (171) einschließt, der zwischen dem ersten Akkumulationskondensator (131) und dem Abzweigpunkt (135) eingerichtet ist, wo die Schwingungsleitung (142) elektrisch an die Akkumulationsleitung (130) angeschlossen ist.

5. Stromunterbrechungsvorrichtung (1) nach einem der vorhergehenden Ansprüche, **dadurch gekennzeichnet, dass** die Vorrichtung (1) einen Ladekreis (180) einschließt, der den Schwingkreis auf gesteuerte Weise mit der Masse verbindet, um das schnelle Laden eines oder mehrerer Kondensatoren des Schwingkreises zu bewirken.

6. Stromunterbrechungsvorrichtung (1) nach Anspruch 5, **dadurch gekennzeichnet, dass** der Ladekreis (180) einen Ladesteuerschalter (183) einschließt.

7. Stromunterbrechungsvorrichtung (1) nach Anspruch 6, **dadurch gekennzeichnet, dass** der Ladekreis (180) einen Ladekondensator (182) einschließt, von dem eine Belegung elektrisch mit dem Schwingkreis verbunden ist und dessen andere Belegung selektiv über den Ladesteuerschalter (183) mit der Masse verbunden ist.

8. Stromunterbrechungsvorrichtung (1) nach einem der Ansprüche 5 bis 7, **dadurch gekennzeichnet, dass** der Ladekreis (180) einen elektrischen Ladewiderstand (181) einschließt.

9. Stromunterbrechungsvorrichtung (1) nach einem der vorhergehenden Ansprüche, **dadurch gekennzeichnet, dass** ein Widerstand (172) parallel zu dem Strombegrenzer (111) angeordnet ist und einem oder mehreren Unterbrechungs- oder Umschaltorganen zugehörig ist, die das Fließen des Stroms des Hauptübertragungskreises (141) entweder durch den Strombegrenzer (111) oder durch den parallelen Widerstand (172) ermöglichen.

10. Stromunterbrechungsvorrichtung (1) nach einem der vorhergehenden Ansprüche, **dadurch gekennzeichnet, dass** der Strombegrenzer (111) vom Typ supraleitender Widerstand ist.

11. Stromunterbrechungsvorrichtung (1) nach einem der vorhergehenden Ansprüche, **dadurch gekennzeichnet, dass** sie eine elektronische Steuerschaltung (103) einschließt, die dazu geeignet ist, die Hauptunterbrechungsvorrichtung (121) und den Schwingungssteuerschalter (122) hin zu ihrem offenen oder hin zu ihrem geschlossenen Zustand zu steuern.

12. Stromunterbrechungsvorrichtung (1) nach einem der vorhergehenden Ansprüche, **dadurch gekennzeichnet, dass** die Steuerschaltung (103) dazu ausgestaltet ist, einen Überstrom in dem ersten Betriebsmodus zu ermitteln, und dazu ausgestaltet ist, ein Signal zur Öffnung der Hauptunterbrechungseinrichtung (121) spätestens 100 Millisekunden nach der Ermittlung des Überstroms zu erzeugen.

13. Stromunterbrechungsvorrichtung (1) nach einem der vorhergehenden Ansprüche, **dadurch gekennzeichnet, dass** der Steuerkreis (103) in dem zweiten Betriebsmodus dazu ausgestaltet ist, ein Signal zur Öffnung der Hauptunterbrechungseinrichtung (121) zu erzeugen, und dazu ausgestaltet ist, ein Signal zur Schließung des Schwingungssteuerschalters (122) nach der Erzeugung des Signals zur Öffnung der Hauptunterbrechungseinrichtung (121) zu erzeugen.

14. Stromunterbrechungsvorrichtung (1) nach einem der vorhergehenden Ansprüche, **dadurch gekennzeichnet, dass** ein Überspannungsableiter elektrisch parallel mit mindestens einem Akkumulationskondensator (131, 132) geschaltet ist.

15. Stromunterbrechungsvorrichtung (1) nach einem der vorhergehenden Ansprüche, **dadurch gekennzeichnet, dass** sie einen "Snubber"-Kreis einschließt, der elektrisch parallel an die Anschlüsse (124, 125) der Hauptunterbrechungseinrichtung (121) angeschlossen ist.

**Claims**

1. A high-voltage direct current cut-off device (1),

   - comprising:

      • a first terminal (101) and a second terminal (102);
      • a main conduction line (141) which extends between the first and second terminals and which comprises, in series, a main current cut-off apparatus (121), having a first terminal (124) and a second terminal (125), and a current limiter (111) configured to limit any current passing through it of which the intensity exceeds a value called the threshold intensity to a value called limited intensity;
      • an accumulation line **(130)**, connected at its two ends to the main conduction line **(141)**, electrically in parallel with the current limiter **(111)**, and comprising at least one accumulation capacitor;
      • an oscillation line **(142)**, electrically in parallel with the main cut-off apparatus **(121)** with respect to the main conduction line **(141)**, comprising an oscillation control switch **(122)** and having an inductance **(133)**;

   - wherein all or part of the main conduction line **(141)**, of the accumulation line **(130)** and of the oscillation line **(142)** form, at the terminals of the main cut-off apparatus **(141)**, an oscillating circuit when the oscillation control switch **(122)** is brought to a closed state;
   - and wherein the device **(1)** has a first operating mode in which the main cut-off apparatus **(121)** is in a closed state and the oscillation control switch **(122)** is in an open state, and at least one second operating mode wherein the main cut-off apparatus **(121)** is commanded to an open state and the oscillation control switch **(122)** is commanded to a closed state,

   **characterized in that**
   the accumulation line **(130)** includes at least one first accumulation capacitor **(131)** and one second accumulation capacitor **(132)**, and **in that** the oscillation line extends from a branch connection point **(135)** of the accumulation line situated between the two accumulation capacitors **(131, 132)**, determining a primary segment **(136)** and a secondary segment **(137)** of the accumulation line **(130)**, the secondary segment **(137)** being connected to the main conduction line **(141)** between the current limiter **(111)** and the main cut-off apparatus **(121)** so as to form part of the oscillation circuit.

2. The current cut-off device **(1)** according to claim **1, characterized in that** it includes at least one surge arrestor connected to at least one of the first terminal **(101)** and of the second terminal **(102)** of the device, preferably a first surge arrestor **(151)** connected to the first terminal **(101)** and a second surge arrestor **(152)** connected to the second terminal **(102)** of the device.

3. The current cut-off device **(1)** according to one of the preceding claims, **characterized in that** said oscillation line **(142)** comprises a supplementary oscillation capacitor **(134)** connected in series with said oscillation control switch **(122).**

4. The current cut-off device **(1)** according to any one of the preceding claims, **characterized in that** the device **(1)** includes, in series in the primary segment **(136)** of the accumulation line **(130)**, an additional resistance **(171)** arranged between the first accumulation capacitor **(131)** and the branch connection point **(135)** where the oscillation line **(142)** is electrically connected to the accumulation line **(130)**.

5. The current cut-off device **(1)** according to any one of the preceding claims, **characterized in that** the device **(1)** includes a charging circuit **(180)** connecting, in a controlled manner, the oscillation circuit to ground to cause the rapid charging of one or more capacitors of the oscillation circuit.

6. The current cut-off device **(1)** according to claim **5, characterized in that** the charging circuit **(180)** includes a charging control switch **(183).**

7. The current cut-off device **(1)** according to claim **6, characterized in that** the charging circuit **(180)** includes a charging capacitor **(182)** of which one plate is electrically connected to the oscillating circuit and of which the other plate is connected selectively, by means of the charging control switch **(183),** to ground.

8. The current cut-off device **(1)** according to one of claims **5** to **7, characterized in that** the charging circuit **(180)** includes an electrical charging resistance **(181).**

9. The current cut-off device **(1)** according to any one of the preceding claims, **characterized in that** a resistance **(172)** is disposed in parallel with the current limiter **(111),** and is associated with one or more cut-off or commutation members allowing the circulation of the main conduction current **(141)** either through the current limiter **(111)** or through the parallel resistance **(172).**

10. The current cut-off device **(1)** according to any one of the preceding claims, **characterized in that** said current limiter **(111)** is of the superconducting resistor type.

11. The current cut-off device **(1)** according to any one of the preceding claims, **characterized in that** it comprises an electronic control circuit **(103)** capable of controlling the main cut-off apparatus **(121)** and the oscillation control switch **(122)** to their open state or to their closed state.

12. The current cut-off device **(1)** according to any one of the preceding claims, **characterized in that** said control circuit **(103)** is configured to detect excess intensity in the first operating mode and configured to generate an opening signal of the main cut-off apparatus **(121)** 100 milliseconds at the latest after said excess intensity detection.

13. The current cut-off device **(1)** according to any one of the preceding claims, **characterized in that** said control circuit **(103)** in the second operating mode is configured to generate an opening signal of the main cut-off apparatus **(121)** and configured to generate a closing signal of the oscillation control switch **(122)** after the generation of the opening signal of the main cut-off apparatus **(121).**

14. The current cut-off device **(1)** according to any one of the preceding claims, **characterized in that** a surge arrestor is connected electrically in parallel with at least one accumulation capacitor **(131, 132).**

15. The current cut-off device **(1)** according to any one of the preceding claims, **characterized in that** it includes a "snubber" circuit connected electrically in parallel with the terminals **(124, 125)** of the main cut-off apparatus **(121).**

FIG.1

FIG.2

FIG.3

FIG.4

FIG.5A

FIG.5B

FIG.5C

FIG.6

FIG.7

FIG.8

FIG.9

**EP 3 577 672 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0431510 A

- WO 2016092182 A